# EUROPEAN PATENT APPLICATION

(11) **EP 2 755 298 A2**
(43) Date of publication of application: **16.07.2014**
(21) Application number: 13152142.9
(22) Date of filing: 22.01.2013
(51) Int. Cl.: H02J 9/00

(54) **Power system for data center**

(30) Priority: 10.01.2013 US 201313737951
(71) Applicant: GCCA Inc., Tortola (VG)
(72) Inventor: Szu, Oliver, Taipei (TW)
(74) Representative: Viering, Jentschura & Partner Patent- und Rechtsanwälte

(57) **Abstract**

A power system (200) for data center (210), which comprises: a critical electrical equipment (211), an alternating current (AC) transformer (121), an AC power distribution unit (PDU) (123), a rectifier transformer (231), and a DC PDU (233). The critical electrical equipment (211) is disposed in the data center (210). The AC transformer (121) is utilized to receive a first high AC electrical power from a first power utility (120) and transform it to a low AC electrical power, and the AC PDU (123) receives the low AC electrical power and applies the low AC electrical power to the critical electrical equipment (211) of the data center (210). Further, the rectifier transformer (231) is utilized to receive a second high AC electrical power from a second power utility (130) and transform and rectify it to a low direct current (DC) electrical power, and a DC PDU (233) receives the low DC electrical power and applies the low DC electrical power to the critical electrical equipment (211).

## Description

### BACKGROUND

### Field of Invention

The present invention relates to a power system, more particularly, the present invention relates to a power system with a rectifier transformer for data center.

### Description of Related Art

With the advent of the information technology age, data centers have been become critical to the operation of almost all large scale enterprises. Illustrative enterprises that rely on data centers include: financial service companies, government agencies, defense operations, hospitals, commercial Websites, etc. As the need to accommodate and process more and more data grows, greater and greater demands are placed onto the infrastructure of the data center.

A data center typically houses many racks of servers, which perform the processing tasks, simultaneously, which cannot be achieved by a single machine. The role of a data center is often critical to an enterprise, and typically, the downtime of a data center can result in severe consequences to the enterprise and others who may rely on the data center. Since power failures are not uncommon, data centers use power systems to deal with interruptions in the supply of power from utility services that would result in downtime, frequently.

One power system designed for providing emergency power to computing resources is called an uninterrupted power supply (UPS). In a typically data center deployment, an UPS is placed between the input power terminal from a utility service and one or more power distribution units in the data center, to which the servers are connected with each other. When the utility power is functioning properly, the UPS uses a portion of the utility power to charge a battery within the UPS, using an internal rectifier to convert the AC power from the utility service into DC power for charging the battery. The majority of the remaining power from the utility service is passed along for use by the site. If an interruption in the utility power occurs, the UPS provides temporary backup power to the site by using an inverter to convert the DC power stored in its battery into AC power. This temporary power is available for a short period of time, allowing an auxiliary power supply (such as a generator) to be turned on or allowing the equipment to be shut down safety, thereby avoiding catastrophic loss.

Because the power conversions performed by the rectifier and inverters in the UPS are relatively inefficient, the UPS process can result in a power loss of up to 10-12%. For large data centers, this inefficiency can be very significant. Not only is this a waste of electrical power and the costs associated therewith, it also produces heat at the UPS and thus requires additional electrical power to remove the additional heat using an air conditioning system.

Moreover, a power system for a data center sometimes has a lot of UPS modules, and the manufacturing cost of the power system should be very expensive.

### SUMMARY

One object of the present invention is to promote the efficiency of a power system for data centers.

Another object of the present invention is to cost down the manufacturing cost of a power system.

In order to approach the foregoing object, the present invention provides a power system for a data center, which comprises: a first critical electrical equipment, an alternating current (AC) transformer, a first AC power distribution unit (PDU), a rectifier transformer and a DC PDU. The first critical electrical equipment is disposed in the data center, and the first critical electrical equipment includes a first power supply unit with a first input port and a second input port. The AC transformer is utilized to receive a first high AC electrical power from a first utility power and to transform the first high AC electrical power to a first low AC electrical power. The first AC PDU is connected to the AC transformer for receiving the first low AC electrical power, and is connected to the first input port for applying the first low AC electrical power to the first critical electrical equipment of the data center. The rectifier transformer is utilized to receive a second high AC electrical power from a second utility power, and to transform and rectify the second high AC electrical power to a low direct current (DC) electrical power. The DC PDU is connected to the rectifier transformer for receiving the low DC electrical power, and is connected to the second input port for applying the low DC electrical power to the first critical electrical equipment of the data center.

In certain embodiments, the first critical electrical equipment includes an information technology (IT) equipment.

In certain embodiments, the rectifier transformer further transforms the second high AC electrical power to a second low AC electrical power. In those cases, the power system further comprises: a second AC PDU connected to the rectifier transformer for receiving and applying the second low AC electrical power.

In certain embodiments, the power system further comprises: a second critical electrical equipment, a third critical electrical equipment and a non-critical electrical equipment. The second critical electrical equipment, the third critical electrical equipment and the non-critical electrical equipment are all disposed in the data center. The second critical electrical equipment incudes a second power supply unit for receiving the first low AC electrical power and the second low AC electrical power. The third critical electrical equipment includes a third power supply unit for receiving the low DC electrical power. The non-critical electrical equipment includes a fourth power supply unit for receiving the first low AC electrical power and the second low AC electrical power.

In certain embodiments, the power system further comprises: an uninterrupted power supply (UPS) device disposed between the second critical equipment and the second AC PDU for ensuring the second critical electrical equipment uninterrupted.

In certain embodiments, the power system further comprises: a battery bank connected to the DC PDU for applying a DC electrical power to the first critical electrical equipment via the DC PDU when the second high AC electrical power is interrupted.

In certain embodiments, the power system further comprises: a generator equipment connected to the AC transformer and the rectifier transformer, respectively. In these cases, the generator equipment comprises: an outputting control unit and a plurality of generators. The outputting control unit is connected to the AC transformer and the rectifier transformer, respectively. The plurality of generators are connected to the outputting control unit in parallel.

In certain embodiments, the power system further comprises: a first switching unit, a second switching unit, a third switching unit and a fourth switching unit. The first switching unit is connected to the AC transformer and the first utility power, respectively. The second switching unit is connected to the outputting control unit of the generator equipment and the AC transformer, respectively. The third switching unit is connected to the rectifier transformer and the second utility power, respectively. The fourth switching unit is connected to the outputting control unit of the generator equipment and the rectifier transformer, respectively.

In certain embodiments, the first power supply unit of the critical electrical equipment comprises: a dual-input terminal, a power conversion circuit, an input source selection controller, a load adjustment switch circuit, an automatic switch circuit and an output terminal. In these cases, the power conversion circuit further includes a full-wave rectification circuit and a DC-DC converter.

In certain embodiment, the data center is a Tier 3 data center.

As mentioned-above, the power system for data center disclosed in the present invention may save over 35% manufacturing cost of a power system. Moreover, the power system for data center of the present invention may also promote the efficiency over 7.3% than a standard power system for data center.

### BRIEF DESCRIPTION OF THE DRAWINGS

The present description will be better understood from the following detailed description read in light of the accompanying drawings, wherein:

FIG. 1 illustrates a schematic diagram illustrating a standard power system for a data center;

FIG. 2 illustrates a schematic diagram illustrating a main uninterrupted power supply (UPS) equipment;

FIG. 3 illustrates a schematic diagram illustrating a generator equipment;

FIG. 4 illustrates a schematic diagram illustrating an embodiment of a power system for a data center according to the present invention; and

FIG. 5 illustrates a schematic diagram illustrating an embodiment of a dual-input power supply unit of critical electrical equipment in the data center.

### DETAILED DESCRIPTION

The following description includes discussion of figures having illustrations given by way of example of implementations of embodiments of the invention. The drawings should be understood by way of example, and not by way of limitation. As used herein, references to one or more "embodiments" are to be understood as describing a particular feature, structure, or characteristic induced in at least one implementation of the invention. Thus, phrases such as "in one embodiment" or "in an alternate embodiment" appearing herein describe various embodiments and implementations of the invention, and do not necessarily all refer to the same embodiments. However, they are also not necessarily mutually exclusive.

Descriptions of certain details and implementations follow, including a description of the figures, which may depict some or all of the embodiments described below, as well as discussing other potential embodiments or implementations of the inventive concepts presented herein. An overview of embodiments of the invention is provided below, followed by a more detailed description with reference to the drawings.

The present invention provides a power system for data centers without a lot of UPS units for promoting the efficiency of the power system and for costing down the manufacturing cost of the power system.

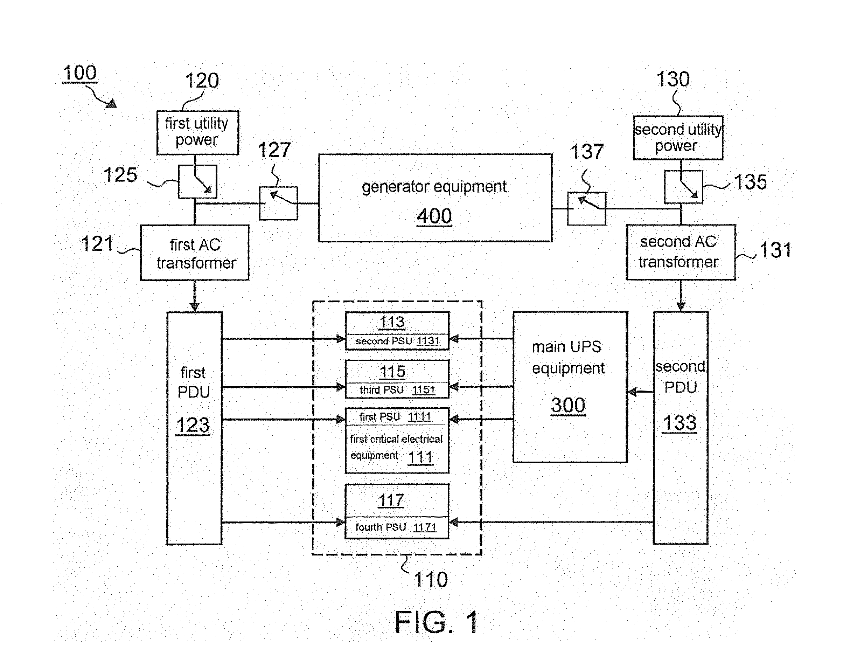

Referring to FIG. 1, it illustrates a schematic diagram illustrating a standard power system 100 for a data center 110. The data center 110 at least includes three kinds of equipments: first critical electrical equipments 111, second critical electrical equipments 113, third critical electrical equipments 115 and non-critical electrical equipments 117.

The first critical electrical equipments 111 include information technology (IT) equipments. The IT equipments may be used to the functions as following: operating and managing a carrier's telecommunication network; providing data center based applications directly to the carrier's customers; providing hosted applications for a third party to provide services their customers; and providing a combination of these and similar data center applications. However, they are not limited in these.

The second critical electrical equipments 113 include alternating current (AC) loading equipments, and the third critical electrical equipments 115 include direct current (DC) loading equipments. In the present invention, the second critical electrical equipments 113 and the third critical electrical equipment 115 are not the IT equipments, but still critical to the data center, such as fans and security system.

The non-critical electrical equipments 117 includes AC loading equipments, which may be bear a short interruption of electrical power, such as compressors of air-condition and lightening system.

In 2005 it published American national standards institute (ANSI) / telecommunications industry association (TIA)-942, telecommunications infrastructure standard for data centers, which defines four levels (called tiers) of data centers in a thorough, quantifiable manner. The higher the tier, the greater the availability. The requirements of the Tier 1 include that single non-redundant distribution path serving an information technology (IT) equipment, and non-redundant capacity components; the requirements of the Tier 2 include that meets or exceeds all Tier 1 requirements; the requirements of the Tier 3 include that meets or exceeds all Tier 1 and Tier 2 requirements, multiple independent distribution path serving an IT equipment, and all IT equipment must be dual-powered and fully compatibly with the topology of a site's architecture; and the requirements of the Tier 4 include that meets or exceeds all Tier 1, Tier 2 and Tier 3 requirements, and all cooling equipment is independently dual-powered, including chillers and heating, ventilating and air-conditioning (HVAC) systems.

In the illustrative embodiment, the data center 110 is a Tier 3 data center. Thus, the data center 110 is dual-powered from a first utility power 120 and a second utility power 130.

In this power system 100, the first utility power 120 provides a first high AC electrical power feeding to a first AC transformer 121. After receiving the first high AC electrical power, the first AC transformer 121 transforms the first high AC electrical power to a first low AC electrical power. The first low AC electrical power is sent to a first AC power distribution unit (PDU), which is connected to the first AC transformer 121, and the first AC PDU would apply the first low AC electrical power to the first critical electrical equipments 111, the second critical electrical equipments 113, the third critical electrical equipment 115 and the non-critical electrical equipment 117, of the data center 110, respectively.

Further, the second utility power 130 provides a second high AC electrical power feeding to a second AC transformer 131. Similarly, after receiving the second high AC electrical power, the second AC transformer 131 transforms the second high AC electrical power to a second low AC electrical power. The second low AC electrical power is sent to a second PDU, which is connected to the second AC transformer 131, and the second PDU would apply the second AC electrical power to a main uninterrupted power supply (UPS) equipment 300 and the non-critical electrical equipment 117 of the data center 110, respectively. The main UPS equipment 300 is connected to the first critical electrical equipments 111, the second critical electrical equipments 113 and the third critical electrical equipment 115 for ensuring electrical power uninterrupted.

It's anticipated that the values of the first high AC electrical power and the second high AC electrical power should be different in the different countries, and the first low AC electrical power and the second low AC electrical power should be dependent on the requirements of the users. Thus, the accurate values of those electrical powers should not be limited.

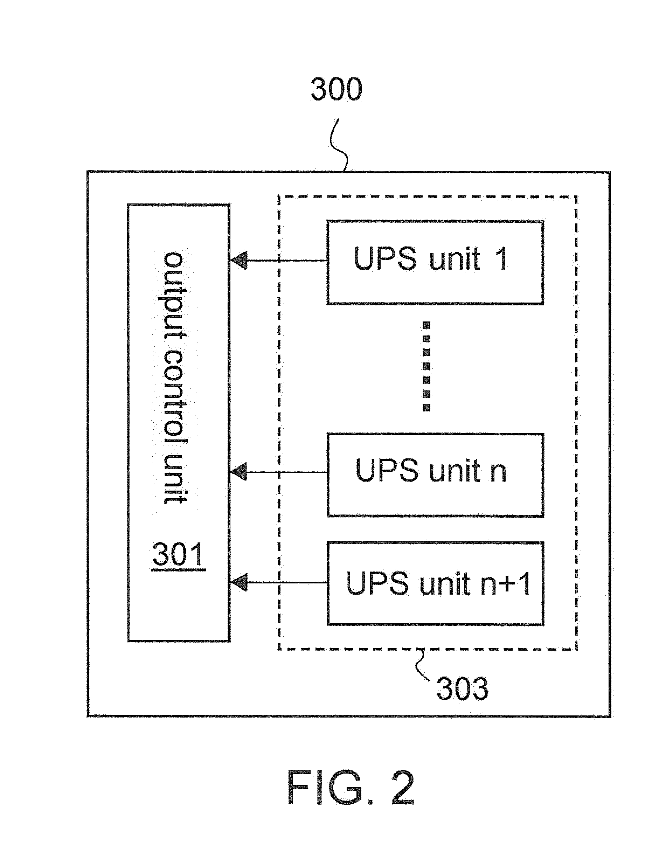

Referring to FIG. 2, it illustrates a schematic diagram illustrating a main UPS equipment 300. The main UPS equipment 300 includes an output control unit 301 and a plurality of UPS units 303, and each of the plurality of UPS units 303 is connected to the output control unit 301 in parallel. The output control unit 301 is electrically connected to the first critical electrical equipments 111, the second electrical equipments 113 and the third electrical equipments 115. In the illustrative embodiment, the plurality of UPS units 303 include a UPS unit 1, ..., a UPS unit n and a UPS unit n+1. The UPS unit n+1 is used for fault-tolerance, and making sure the operation of the main UPS equipment 300 well.

In FIG. 1, the first critical electrical equipments 111 include a first power supply unit (PSU) 1111, which has two ports for electrically connecting to the first PDU 123 and the main UPS equipment 300. The second critical electrical equipments 113 include a second power supply unit 1131, which also has two ports for electrically connecting to the first PDU 123 and the main UPS equipment 300. The third critical electrical equipments 115 include a third power supply unit 1151, which also has two ports for electrically connecting to the first PDU 123 and the main UPS equipment 300, and the third power supply 1151 further includes a AC-DC converter for converting the AC electrical power to DC electrical power. The fourth power supply unit 1171, which also has two ports for electrically connecting to the first PDU 123 and the second PDU 133.

In FIG. 1, the power system 100 further includes a generator equipment 400, the generator equipment 400 is connected to the first AC transformer 121 and the second AC transformer 131, respectively. The generator equipment 400 is used to generate an electrical power when the first high AC electrical power is not provided by the first utility power 120 and the second high AC electrical power is not provided by the second utility power 130 at the same time.

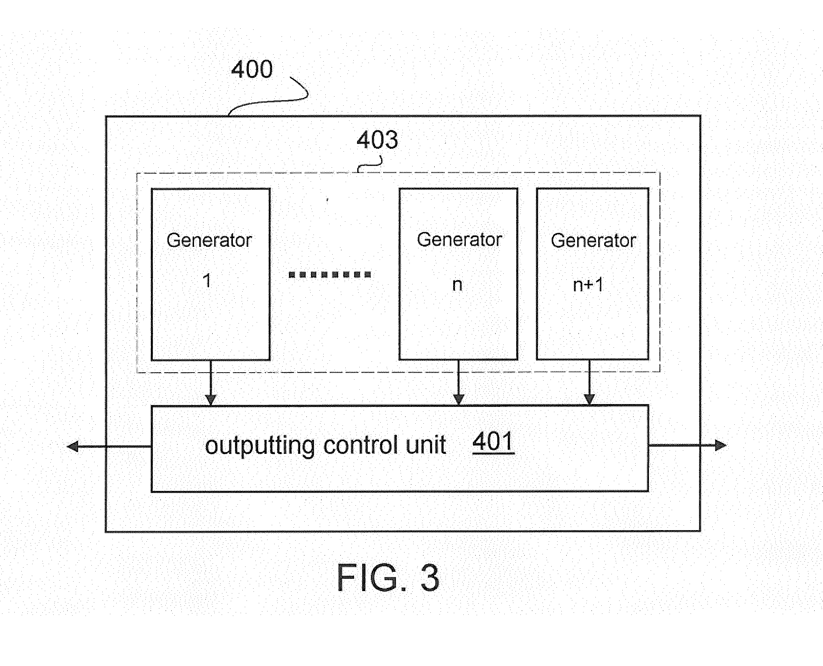

Referring to FIG. 3, it illustrates a schematic diagram illustrating a generator equipment 400. The generator equipment 400 includes an outputting control unit 401 and a plurality of generators 403, and each of the plurality of generators 403 is connected to the outputting control unit 401 in parallel. The outputting control unit 401 is electrically connected to the first AC transformer 121 and the second AC transformer 131, respectively. In the illustrative embodiment, the plurality of generators 403 include a generator 1, .... a generator n and a generator n+1. The generator n+1 is used for fault-tolerance, and each of the generators 403 should be shut-down at once for maintaining without affecting the operation of the generator equipment 400.

In FIG. 1, the power system 100 further includes a first switching unit 125, a second switching unit 127, a third switching unit 135 and a fourth switching unit 137. The first switching unit 125 is connected to the first AC transformer 121 and the first utility power 120, respectively. The second switching unit 127 is connected to the outputting control unit 401 of the generator equipment 400 and the first AC transformer 121, respectively. The first switching unit 125 is used to switch whether the first high AC electrical power from the first utility power 120 is sent to the first AC transformer 121 or not. The second switching unit 127 is used to switch whether the electrical power from the generator equipment 400 is sent to the first AC transformer 121. Furthermore, the third switching unit 135 is connected to the second AC transformer 131 and the second utility power 130, respectively. The fourth switching unit 137 is connected to the outputting control unit 401 of the generator equipment 400 and the second AC transformer 131, respectively. Similarly, the third switching unit 135 is used to switch whether the second high AC electrical power from the second utility power 130 is sent to the second transformer 131 or not. The fourth switching unit 137 is used to switch whether the electrical power from the generator equipment 400 is sent to the second AC transformer 131.

As the foregoing description, the standard power system 100 for a data center 110 needs a main UPS equipment 300, which includes a lot of UPS units 303 (1 to n+1). Each of the UPS units 303 has complicated circuits and switches, thus, the manufacturing cost of the main UPS equipment 300 is very expensive. Further, the complicated circuits and switches in the main UPS equipment 300 should reduce the efficiency of the power system 100.

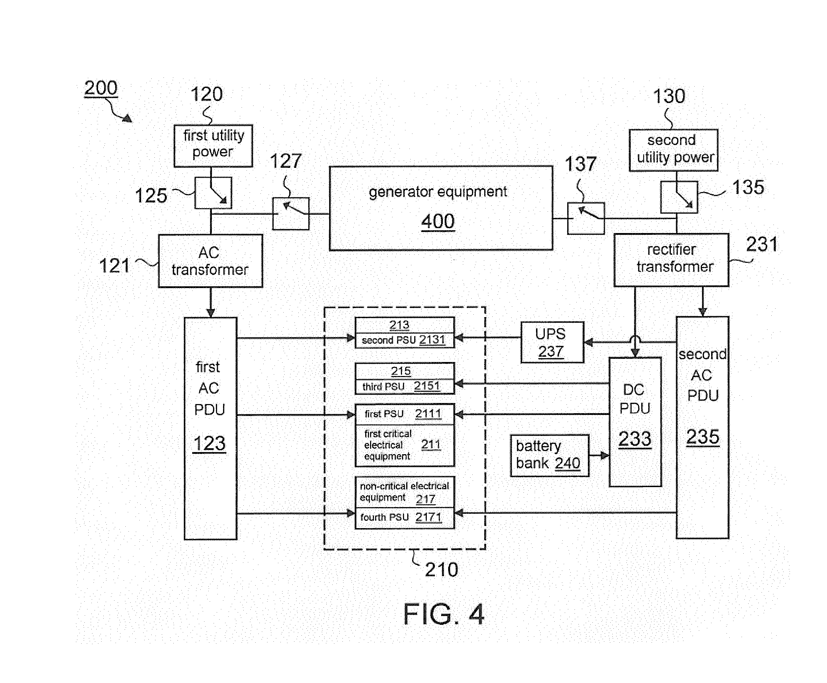

Referring to FIG. 4, it illustrates a schematic diagram illustrating an embodiment of a power system 200 for a data center 210 according to the present invention. In FIG. 4, several components (for example, the first utility power 120, the AC transformer 121, the first AC PDU 123, the first switching unit 125, the second switching unit 127, the second utility power 130, the third switching unit 135, the fourth switching unit 137 and the generator equipment 400) of the power system 200 are similar with, or the same as, those of the power system 100, and those components are used the same reference for clearly Moreover, the detail functions of those components will not be repeated for briefly.

The power system 200 shown in FIG. 4 uses a rectifier transformer 231 to replace the second AC transformer 131 and to eliminate the main UPS equipment 300 of the power system 100 shown in FIG. 1.

In FIG. 4, the data center 210 also includes: first critical electrical equipments 211, second critical electrical equipments 213, third critical electrical equipments 215 and non-critical electrical equipment 217. The operations of the first critical electrical equipments 211, the second critical electrical equipments 213, the third critical electrical equipments 215 and the non-critical electrical equipment 217 are similar with the first critical electrical equipments 111, the second critical electrical equipments 113, the third critical electrical equipments 115 and non-critical electrical equipment 117 of the data center 110 in FIG. 1. Similarly, the first critical electrical equipments 211 has a first power supply unit 2111, the second critical electrical equipments 213 has a second power supply unit 2131, the third critical electrical equipments 215 has a third power supply unit 2151. and the non-critical electrical equipments 217 has a fourth power supply unit 2171. However, in FIG. 4, the first power supply unit 2111 may receive a DC electrical power directly. Moreover, the third critical electrical equipments 215 are DC loading equipments, and the third power supply unit 2151 also may receive a DC electrical power directly without any AC-DC converter for saving cost.

In the illustrative embodiment, the rectifier transformer 231 is electrically connected to the second utility power 130 and a generator equipment 400 via a third switching unit 135 and a fourth switching unit 137, respectively. Furthermore, the power system 200 includes a DC PDU 233 and a second AC PDU 235, and the DC PDU 233 and the second AC PDU 235 are connected to the rectifier transformer 231. Therefore, the second utility power 130 provides a second high AC electrical power to the rectifier transformer 231, and the rectifier transformer 231 transforms the second high AC electrical power to a second low AC electrical power firstly. Subsequently, the second low AC electrical power is divided to two paths. One path is sent to the AC PDU 235, and the AC PDU 235 applies the second low AC electrical power to a UPS device 237 and the fourth power supply unit 2171 of the non-critical electrical equipment 217. Another path of the second low AC electrical power is rectified to a low DC electrical power by the rectifier transformer 231, and the low DC electrical power is sent to the DC PDU 233. The DC PDU 233 applies the low DC electrical power to the first power supply unit 2111 of the first critical electrical equipment 211 and the third power supply unit 2151 of the third critical electrical equipment 215, respectively.

In the illustrative embodiment, the UPS device 237 is a small UPS device only for ensuring the power supply unit 2131 of the second critical electrical equipment 213 uninterrupted.

In FIG. 4, the power system 200 further includes a battery bank 240, which is connected to the DC PDU 233. Thus, when the second high AC electrical power from the utility power 130 is interrupted and the generator equipment 400 is still not operated to generate electrical power, the DC PDU 233 may receive a DC electrical power from the battery bank and making sure the first power supply unit 2111 of the first critical electrical equipment 211 and the third power supply unit 2151 of the third critical electrical equipment 215 uninterrupted.

It's anticipated that the capacity and size of the battery bank 240 are dependent on the requirements of the users. They should be any capacity and size, but not be limited.

In some embodiment of the present invention, the first power supply unit 2111 of the first critical electrical equipment 211 may be a dual-input power supply unit.

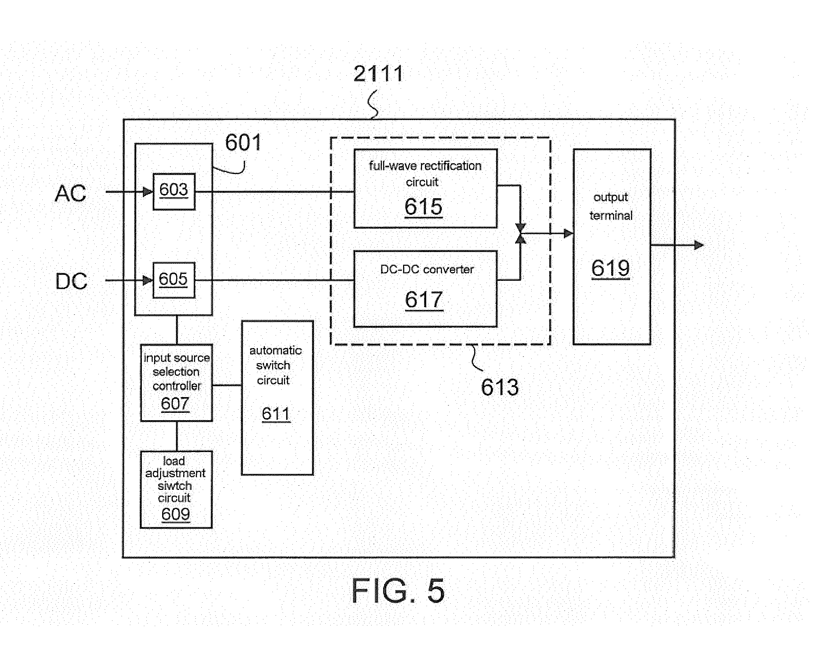

Referring to FIG. 5, it illustrates an embodiment of a dual-input power supply unit 2111 of the first critical electrical equipment 211 in the data center 210. The dual-input power supply unit 2111 includes a dual-input terminal 601, an input source selection controller 607, a load adjustment switch circuit 609, an automatic switch circuit 611, a power conversion circuit 613 and an output terminal 619.

The dual-input terminal 601 further incudes two ports: a first input port 603 and a second input port 605, and the first input port 603 receives AC electrical power and the second input port 605 receives DC electrical power, respectively. Therefore, the first input port 603 may receive the first low AC electrical power from the first AC PDU 123, and the second input port 605 may receive the low DC electrical power from the DC PDU 233, respectively.

In the illustrative embodiment, the input source selection controller 607 is electrically connected to the dual-input terminal 601 and is utilized to select a power supply mode for the same. The power supply mode may be one of the following modes: AC electrical power in priority, DC electrical power in priority, and dual-electrical power supplying.

Furthermore, the load adjustment switch circuit 609 is electrically connected to the input source selection controller 607 for adjusting inputted electrical power loads (of AC and DC) for the dual-input terminal 601. The automatic switch circuit 611 is utilized in power interruption, which is electrically connected to both the dual-input terminal 601 and the input source selection controller 607. In the case, the automatic switch circuit 611 is adapted to detect a power supply status at the dual-input terminal 601.

When the AC electrical power in priority mode is selected by the input source selection controller 607, the automatic switch circuit 611 sends, upon the AC electrical power interrupting, a power interruption signal to the input source selection controller 607 and the input source selection controller 607 switches automatical to a DC electrical power input mode in response. When the DC power source in priority mode is selected by the input source selection controller 607, the automatic switch circuit 611 sends, upon the DC power source interrupting, a power interruption signal to the input source selection controller 607 and the input source selection controller 607 switches automatically to an AC electrical power input mode in response. Therefore, the dual-input power supply unit 2111 maintains its supply function in any case.

In the illustrative embodiment, the power conversion circuit 613 comprises a full-wave rectification circuit 615 and a DC-DC converter 617. The full-wave rectification circuit 615 is utilized to transform the inputted AC electrical power into a first unidirectional direct current, and the DC-DC converter 617 is utilized to convert the inputted DC electrical power into a second unidirectional direct current. In this case, the first unidirectional direct current and the second unidirectional direct current have the same rating value, and the two unidirectional direct currents converge to form a third unidirectional direct current which advances to the output terminal 619. The output terminal 619 will apply the third unidirectional direct current to power the first critical electrical equipment 211 of the data center 200 (FIG. 4).

In alternative embodiments, the first and second unidirectional direct current are unidirectional direct currents of different rating values.

In some embodiments, the full-wave rectification circuit 615 may be a bridge rectifier or a center-tapped circuit.

It's anticipated that the features of the power supply unit 2111 shown in FIG. 5 may also be used to the power supply unit 2131 of the critical electrical equipments 213 of the data center 200.

The first advantage of the present invention is cost saving. The power system of the present invention replacing one AC transformer to rectifier transformer and eliminating the main UPS equipment may be saving the cost of manufacturing the power system over 35%.

Further, the second advantage of the present invention is to promote the efficiency of the power system. In the standard power system in FIG. 1, the efficiency of the power system is around 87.7%. In the power system of the present invention shown in FIG. 4 uses the rectifier transformer and applies DC electrical power to the critical electrical equipment (such as IT equipment) without too much converting AC to DC process. Thus, the efficiency of the power system of the present invention is around 95%, which is over 7.3% to the standard power system.

Moreover, the designs of the main UPS equipment include very complicated circuits within, and the main UPS equipment may be broken easily. The power system of the present invention without the main UPS equipment should be longevity than the standard power system.

It will be understood that the above descriptions of embodiments are given by way of example only and that various modifications may be made by those with ordinary skill in the art. The above specification, examples and data provide a complete description of the structure and use of exemplary embodiments of the invention. Although various embodiments of the invention have been described above with a certain degree of particularity, or with reference to one or more individual embodiments, those with ordinary skill in the art could make numerous alterations to the disclosed embodiments without departing from the spirit or scope of this invention.

## Claims

1. A power system (200) for a data center (210), comprising:
a first critical electrical equipment (211) disposed in the data center (210), and said first critical electrical equipment (211) includes a first power supply unit (2111) with a first input port (603) and a second input port (605);
an alternating current (AC) transformer (121) for receiving a first high AC electrical power from a first utility power (120) and transforming the first high AC electrical power to a first low AC electrical power;
a first AC power distribution unit (PDU) (123) connected to said AC transformer (121) for receiving the first low AC electrical power, and connected to the first input port (603) for applying the first low AC electrical power to said first critical electrical equipment (211) of the data center (210);
a rectifier transformer (231) for receiving a second high AC electrical power from a second utility power (130), and transforming and rectifying the second high AC electrical power to a low direct current (DC) electrical power; and
a DC PDU (233) connected to said rectifier transformer (231) for receiving the low DC electrical power, and connected to the second input port (605) for applying the low DC electrical power to said first critical electrical equipment of the data center.

2. The power system (200) according to the claim 1, wherein said first critical electrical equipment (211) incudes an information technology (IT) equipment.

3. The power system (200) according to the claim 1, wherein said rectifier transformer (231) further transforms the second high AC electrical power to a second low AC electrical power.

4. The power system (200) according to the claim 3, further comprising:
a second AC PDU (235) connected to said rectifier transformer (231) for receiving and applying the second low AC electrical power.

5. The power system (200) according to the claim 4, further comprising:
a second critical electrical equipment (213) disposed in the data center (210), and said second critical electrical equipment (213) including a second power supply unit (2131) for receiving the first low AC electrical power and the second low AC electrical power;
a third critical electrical equipment (215) disposed in the data center (210), and said third critical electrical equipment (215) including a third power supply unit (2151) for receiving the low DC electrical power; and
a non-critical electrical equipment (217) disposed in the data center (210), and said non-critical electrical equipment (217) including a fourth power supply unit (2171) for receiving the first low AC electrical power and the second low AC electrical power.

6. The power system (200) according to the claim 5, further comprising:
an uninterrupted power supply (UPS) device (237) disposed between said second critical electrical equipment (213) and said second AC PDU (235) for ensuring said second critical electrical equipment uninterrupted.

7. The power system (200) according to the claim 1, further comprising:
a battery bank (240) connected to said DC PDU (233) for applying a DC electrical power to the first critical electrical equipment via said DC PDU (233) when the second high AC electrical power is interrupted.

8. The power system (200) according to the claim 1, further comprising:
a generator equipment (400) connected to said AC transformer (121) and said rectifier transformer (231), respectively.

9. The power system (200) according to the claim 8, wherein said generator equipment (400) comprising
an outputting control unit (401) connected to said AC transformer (121) and said rectifier transformer (231), respectively; and
a plurality of generators (403) connected to said outputting control unit (401) in parallel.

10. The power system (200) according to the claim 9, further comprising:
a first switching unit (125) connected to said AC transformer (121) and the first utility power (120), respectively;
a second switching unit (127) connected to the outputting control unit (401) of said generator equipment (400) and said AC transformer (121), respectively;
a third switching unit (135) connected to said rectifier transformer (231) and the second utility power (130), respectively; and
a fourth switching unit (137) connected to said outputting control unit (401) of said generator equipment (400) and said rectifier transformer (231), respectively.

11. The power system (200) according to the claim 1, wherein said first power supply unit (2111) comprises:
a dual-input terminal (601) having the first input port (603) and the second input port (605);
a power conversion circuit (613) electrically connected to the dual-input terminal (601);
an input source selection controller (607) electrically connected to the dual-input terminal (601) for selecting an electrical power mode for the dual-input terminal (601);
a load adjustment switch circuit (609) electrically connected to the input source selection controller (607) for adjusting inputted electrical power loads for the dual-input terminal (601);
an automatic switch circuit (611) electrically connected to the dual-input terminal (601) and the input source selection controller (607) for detecting a power supply status at the dual-input terminal (601); and
an output terminal (619) electrically connected to the power conversion circuit (613) for powering said first critical electrical equipment (211).

12. The power system (200) according to claim 11, wherein the power conversion circuit (613) includes:
a full-wave rectification circuit (615) for transforming the first low AC electrical power into a first unidirectional direct current; and
a DC-DC converter (617) for transforming the low DC electrical power into a second unidirectional direct current;
wherein the first unidirectional direct current and the second unidirectional direct current converge to form a third unidirectional direct current to the output terminal (619).

13. The power system (200) according to claim 12, wherein the full-wave rectification circuit (615) is a bridge rectifier.

14. The power system (200) according to claim 12, wherein the full-wave rectification circuit (615) is a center-tapped circuit.

15. The power system (200) according to claim 1, wherein the data center (210) is a Tier 3 data center.
